# EUROPÄISCHE PATENTSCHRIFT

(11) **EP 0 419 879 B1**
(45) Veröffentlichungstag und Bekanntmachung des Hinweises auf die Patenterteilung: **06.04.1994**
(21) Anmeldenummer: 90116636.3
(22) Anmeldetag: 30.08.1990
(51) Int. Cl.: E05B 17/00, B23P 19/00, E04F 21/00

(54) **Stangenmagazin für maschinell an Fenster- und Türrahmen zu montierende Beschlagteile**
Magazine for lock bars, for mounting door fittings
Magasin pour barres, pour le montage de ferrures pour portes et fenêtres

(30) Priorität: 28.09.1989 DE 8911574 U
(43) Veröffentlichungstag der Anmeldung: 03.04.1991
(73) Patentinhaber: SIEGENIA-FRANK KG, 57074 Siegen (DE)
(72) Erfinder: Loos, Horst, D-5905 Freudenberg-Lindenberg (DE); Zimmermann, Michael, Dipl.-Ing. (FH), D-5900 Siegen 21 (DE)

(56) Entgegenhaltungen:
- EP-A- 0 124 763
- EP-A- 0 309 371
- DE-A- 3 710 384

## Beschreibung

Die Erfindung betrifft ein Stangenmagazin für maschinell an Fenster- und Türrahmen od. dgl., insbesondere am Blend- bzw. Stockrahmen, zu montierende Beschlagteile, vornehmlich für auf die Rahmenstirnfläche aufsetzbare Ecklager, Scherenlager, Drehlager und Mitteldrehlager, welches Halterungen und Führungen zur hinter- und/oder übereinander ausgerichteten Aufnahme einer Vielzahl von jeweils übereinstimmenden Beschlagteilen aufweist, wie z.B. bekannt aus EP-A-0 124 763.

Für die moderne Fenster- und Türenfertigung ist der Einsatz von Montagemaschinen bekannt, mit deren Hilfe sich an den Fenster- und Türrahmen, und zwar insbesondere an den Blend- bzw. Stockrahmen, Beschlagteile ausrichten und befestigen lassen. Dabei treten in vorgegebener bzw. gesteuerter Aufeinanderfolge Bohr- und Schraubaggregate in Tätigkeit und zwischen dem Bohr- und dem Schraubvorgang werden die zu befestigenden Beschlagteile jeweils aus einem Stangenmagazin an die Rahmenstirnfläche unter gleichzeitiger ordnungsgemäßer Ausrichtung herangeführt. Durch den Einsatz dieser Beschlag-Montagemaschinen wird ein hoher Radionalisierungsgrad bei der Fenster- und/oder Türenfertigung erreicht.

Der Einsatz der bekannten Beschlagteil-Montagemaschinen erweist sich jedoch insofern noch als unzulänglich, als die ihnen zugeordneten Stangenmagazine an Ort und Stelle ständig manuell mit den nötigen Beschlagteilen versorgt werden müssen, wobei diese Beschlagteile ungeordnet bzw. chaotisch entweder in loser Schüttung oder aber in Packeinheiten bestimmter Größe bereitgehalten sind, also von Hand ausgerichtet und ordnungsgemäß in die Stangenmagazine einsortiert werden müssen.

Es liegt ohne weiteres auf der Hand, daß die fortwährende Befüllung der Stangenmagazine mit Beschlagteilen große Aufmerksamkeit erfordert und einen relativ hohen Arbeitsaufwand bedingt, wodurch die Bedienperson der Beschlagteil-Montagemaschine so stark beansprucht ist, daß sie den eigentlichen Montagevorgang für die Beschlagteile nicht ständig mit der nötigen Aufmerksamkeit beobachten kann. Die Möglichkeit der Fehlmontage von Beschlagteilen an den Fenster- oder Türrahmen und daraus resultierende Betriebsstörungen an der Beschlagteil-Montagemaschine können sich damit einstellen und folglich die Produktivität beeinträchtigen.

Die Erfindung beseitigt diese Unzulänglichkeiten auf einfache Art und Weise, und zwar durch die gleichzeitige Verwendung der Stangenmagazine sowohl als Transport- und/oder Lagerverpackung als auch als Wechselmagazine auf einer Beschlagteil-Montagemaschine.

Der besondere Vorteil des Erfindungsvorschlags liegt darin, daß sich die Beschlagteile bereits beim Beschlägehersteller in die für die spätere maschinelle Montage notwendige, exakte Ausrichtlage bringen lassen und in dieser auch während der Lagerung und beim Transport gehalten werden.

Am Arbeitsplatz, also an der jeweiligen Beschlagteil-Montagemaschine ist es dann lediglich notwendig, die die Beschlagteile enthaltenden Transport- und/oder Lagerverpackungen als Wechselmagazin zu nutzen, nämlich mit einfachen Handgriffen, also problemlos und schnell, auszutauschen.

Besonders bewährt hat es sich dabei nach der Erfindung, wenn jedes Wechselmagazin von mindestens einem Strangpreß- bzw. Extrusionsprofil aus Metall oder Kunststoff gebildet ist. Dieses läßt sich nämlich dann als Langzeit-Wechselmagazin einsetzen, welches dem Fenster- oder Türenhersteller in befülltem Zustand vom Beschlaghersteller zur Verfügung gestellt wird, während es vom Fenster- oder Türenhersteller im entleerten Zustand wieder dem Beschlaghersteller zwecks erneuter Befüllung zur Verfügung gestellt werden kann.

Selbstverständlich liegt es jedoch auch im Rahmen der Erfindung, jedes Wechselmagazin als Schichtkörperprofil, beispielsweise aus Hartpappe oder auch Blech, auszuführen, welche sich dann ggf. als Einweg-Wechselmagazin benutzen läßt, das nach seiner Entleerung entsorgt bzw. vernichtet werden kann.

In jedem Falle hat es sich nach der Erfindung als wesentlich herausgestellt, daß der Beschlagteil-Stapelschacht des Wechselmagazins ein dem Längsschnitt-Profil der Beschlagteile angepaßtes Querschnittsprofil aufweist, damit sichergestellt ist, daß die Beschlagteile von der Befüllung bis zur Entleerung des Wechselmagazins einwandfrei ihre nötige Ausrichtlage beibehalten.

Ein anderes Erfindungsmerkmal wird noch darin gesehen, daß die Enden des Beschlagteil-Stapelschachtes des Wechselmagazins zumindest bereichsweise durch eine bewegliche Zunge, vorzugsweise eine Federzunge, absperrbar sind, um das unbeabsichtigte bzw. unerwünschte Herausfallen der Beschlagteile zu unterbinden. Die Zunge,insbesondere Federzunge, kann dabei so angeordnet und ausgebildet sein, daß sie beim Einführen des Wechselmagazins in die Beschlagteil-Montagemaschine aus ihrer Sperrlage gelangt und dadurch den Stapelschacht für ein Zusammenwirken mit einer Übergabevorrichtung der Beschlagteil-Montagemaschine freigibt.

Schließlich liegt ein Erfindungsmerkmal aber auch noch darin, daß das Wechselmagazin mit den in seinem Stapelschacht befindlichen Beschlagteilen eine quer zu ihrer Längsrichtung stapelfähige Packeinheit bildet, derart, daß nicht nur eine raumsparende sondern auch stabile Stapelbildung aus einer Vielzahl gleicher Wechselmagazine möglich ist.

Anhand von in der Zeichnung dargestellten Ausführungsbeispielen wird der Gegenstand der Erfindung nachfolgend ausführlich erläutert.

Es zeigt
- Fig. 1: in räumlicher Darstellung eine zur geordneten Aufnahme einer Vielzahl von als Drehkipp-Ecklager ausgeführten Fenster- und Tür-Beschlagteilen dienende Transport- und/oder Lagerverpackung,
- Fig. 2: wiederum in räumlicher Darstellung eine zur geordneten Aufnahme von als Scherenlager, Drehlager oder Mitteldrehlager ausgeführten Fenster- und Tür-Beschlagteilen dienende Transport- und/oder Lagerverpackung,
- Fig. 3: im Querschnitt die Transport- und/oder Lagerverpackung nach Fig. 1 mit darin eingeordneten Drehkipp-Ecklagern,
- Fig. 4: einen Querschnitt durch die Transport- und/oder Lagerverpackung nach Fig. 2 mit darin ausgerichtet eingeordneten Scherenlagern, Drehlagern oder Mitteldrehlagern,
- Fig. 5: in geschnittener Draufsichtsdarstellung die Zuordnungslage von zwei Transport- und/oder Lagerverpackungen der in den Fig. 1 und 3 dargestellten Ausführung, sowie einer Transport- und/oder Lagerverpackung der in den Fig. 2 und 4 dargestellten Ausführung als Wechselmagazine zu einer Beschlagteil-Montagemaschine,
- Fig. 6: die gestapelte Anordnung mehrerer aus Transport- und/oder Lagerverpackungen nach Fig. 1 und in deren Stapelschacht gemäß Fig. 3 eingeordneten Beschlagteilen bestehender Packeinheiten sowie
- Fig. 7: die gestapelte Anordnung mehrerer aus Transport- und/oder Lagerverpackungen nach Fig. 2 sowie in deren Stapelschacht gemäß Fig. 4 eingeordneten Beschlagteilen bestehender Packeinheiten.

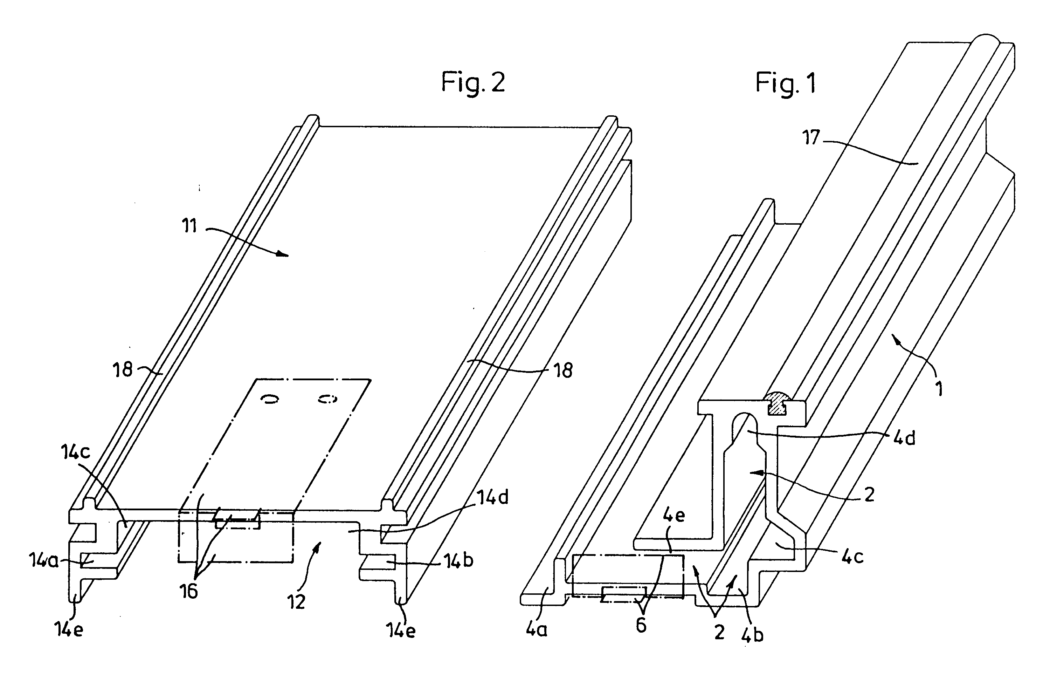

In den Fig. 1 und 2 der Zeichnung werden in räumlicher Darstellung je eine Transport- und/ oder Lagerverpackung 1 bzw. 11 gezeigt, die zur hinterund übereinander ausgerichteten Aufnahme einer Vielzahl von jeweils übereinstimmenden Beschlagteilen 3 bzw. 13 ausgelegt sind, wie sie an Fenster- und Türrahmen od. dgl., und zwar insbesondere an Blend- bzw. Stockrahmen vornehmlich auf der Rahmenstirnfläche, montiert werden müssen.

Zur genau plazierten Anordnung und Befestigung solcher Beschlagteile an Fenster- und Türrahmen od. dgl. werden heute vielfach Beschlagteil-Montagemaschinen eingesetzt. Bei diesen arbeiten mit Anschlag- und Ausrichtsystemen für die Fenster- und Türrahmen od. dgl. nicht nur Bohr- und Schraubaggregate zusammen, sondern sie umfassen auch Manipulator-Aggregate, mit deren Hilfe die verschiedenen Beschlagteile aus zur Bevorratung diendenden Stangenmagazinen entnommen und exakt ausgerichtet an die hiermit zu bestückende Stelle des Fenster- und Türrahmens od. dgl. herangeführt werden, bevor die Schraubaggregate zur Wirkung kommen.

Die in Fig. 1 der Zeichnung dargestellte Transport- und/oder Lagerverpackung 1 für Beschlagteile 3 hat stangenförmige Gestalt und kann dabei vorzugsweise von mindestens einem Stranpreß- bzw. Extrusionsprofil aus Metall oder Kunststoff gebildet werden, welches sich als relativ dünnwandiges, aber formstabiles Hohlprofil ausführen läßt.

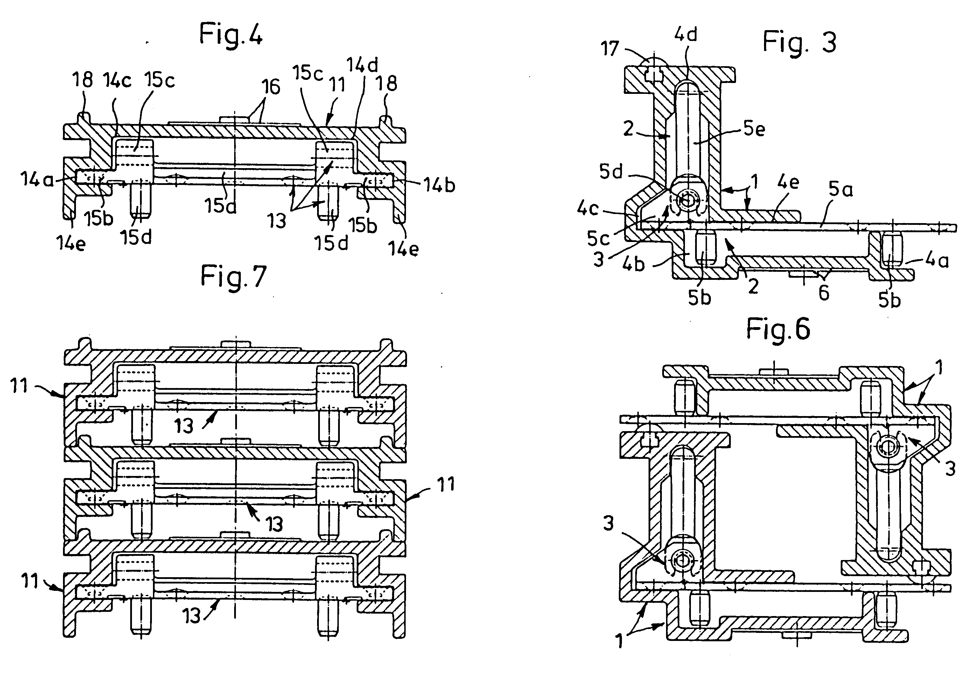

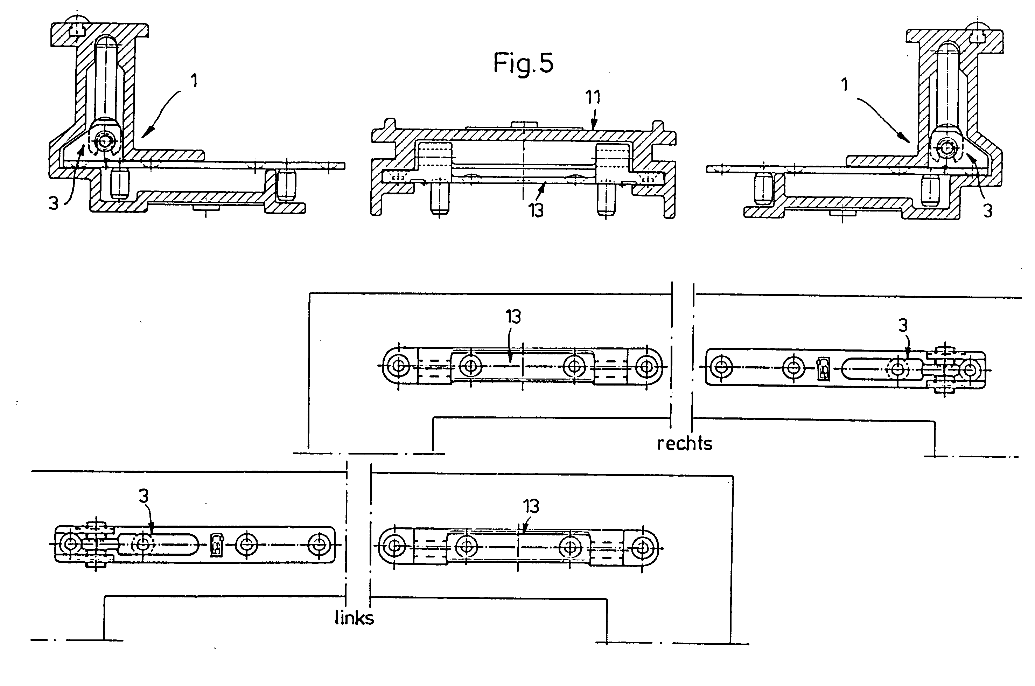

Das die Transport- und/oder Lagerverpackung 1 bildende Hohlprofil ist dabei mit einem Beschlagteil-Stapelschacht 2 ausgestattet, welcher ein Querschnittsprofil aufweist, das dem Längsschnitt-Profil der hierin aufzunehmenden Beschlagteile 3, beispielsweise von Drehkipp-Ecklagern, angepaßt ist, von denen eines in Fig. 3 zu sehen ist. Dabei begrenzt das Querschnittsprofil des Beschlagteil-Stapelschachtes 2 verschiedene Halterungen und Führungen 4a, 4b, 4c, 4d, 4e, welche sicherstellen, daß sämtliche in den Stapelschacht 2 eingebrachten Beschlagteile 3, beispielsweise Drehkipp-Ecklager eine exakt hinter- und/oder übereinander ausgerichtete Aufnahmelage erhalten und auch so lange beibehalten, bis sie, z.B. vom Manipulator-Aggregat der Beschlagteil-Montagemaschine aus der Transport- und/oder Lagerverpackung 1 entnommen werden.

Bei der Transport- und/oder Lagerverpackung 1 nach den Fig. 1 und 3 dienen beispielsweise die Halterungen und Führungen 4a, 4b, 4c und 4e zur Aufnahme und Ausrichtung der rückseitig mit Einbohr-Tragzapfen 5b versehenen Befestigungsplatten 5a des als Drehkipp-Ecklager ausgeführten Beschlagteils 3. Dabei trägt die Befestigungsplatte 5a auf ihrer Vorderseite einen Lagerbock 5c für einen Tragbolzen 5d, auf dem wiederum ein Ecklagerbolzen 5e schwenkbeweglich abgestützt ist. Die geordnete Lagenausrichtung des Ecklagerbolzens 5e innerhalb des Beschlagteil-Stapelschachtes 2 wird dabei wiederum durch eine Halterung und Führung 4d bewirkt, welche das freie Ende des Ecklagerbolzens 5e erfaßt.

Die Halterungen und Führungen 4a bis 4d im Beschlagteil-Aufnahmeschacht 2 der Transport- und/oder Lagerverpackung 1 sind so bemessen, daß sie jedes einzelne Beschlagteil, beispielsweise Dehkipp-Ecklager 3, ständig leichtgängig beweglich halten, ohne daß dessen ordnungsgemäße Ausrichtlage innerhalb des Beschlagteil-Stapelschachtes 2 beeinträchtigt wird.

Jeder Transport- und/oder Lagerverpackung 1 ist an beiden Enden jeweils eine bewegliche Zunge 6, vorzugsweise eine Federzunge, zugeordnet, welche in ihrer Grundstellung den Beschlagteil-Stapelschacht 2 wenigstens bereichsweise absperrt, so daß sich die Beschlagteile, beispielsweise Drehkipp-Ecklager 3, hieraus nicht unbeabsichtigt entfernen können.

In den Fig. 2 und 4 der Zeichnung ist eine stangenförmige Transport- und/oder Lagerverpackung 11 zu sehen, die ebenfalls von mindestens einem Stranpreß- bzw. Extrusionsprofil aus Metall oder Kunststoff gebildet werden kann und dabei mit einem Beschlagteil-Stapelschacht 12 versehen ist. Auch diese Transport- bzw. Lagerverpackung 11 ist so formstabil ausgeführt, daß in ihrem Beschlagteil-Stapelschacht 12 eine Vielzahl übereinstimmender Beschlagteile 13 exakt hinter- und/oder übereinander ausgerichtet aufgenommen werden können.

Die Profilform der Transport- und/oder Lagerverpackung 11 ist hierbei so gewählt, daß in den Beschlagteil-Stapelschacht 12 als Beschlagteile 13 Scherenlager, Drehlager und auch Mitteldrehlager eingeführt werden können, wie sie beim Bau von Fenstern und Türen od. dgl. am Blend- bzw. Stockrahmen befestigt werden müssen.

Zu diesem Zweck sind im Beschlagteil-Stapelschacht 12 eine größere Anzahl von Halterungen und Führungen 14a, 14b, 14c, 14d ausgebildet, und zwar in der Weise, daß sie zumindest Teilbereiche des Längsschnitt-Profils der Beschlagteile 13 passend, aber leicht beweglich aufnehmen können.

So erfassen beispielsweise die Halterungen und Führungen 14a, 14b jeweils einen Anschraublappen 15b der Befestigungsplatte 15a des Beschlagteiles 13, während in die Halterungen und Führungen 14c und 14d jeweils ein von der Vorderseite der Befestigungsplatte 15a abstehendes Lagerauge 15c hineinragt.

Von der Rückseite der Befestigungsplatte 15a des Beschlagteils 13 stehen zwei Einbohr-Tragzapfen 15d ab, die sich wiederum parallel zu Randstegen 14e erstrecken, welche von der Öffnungs-Längsseite des Beschlagteil-Stapelschachtes 12 abstehen.

Auch die Enden des Beschlagteil-Stapelschachtes 12 der Transport- und/oder Lagerverpackung 12 werden von beweglichen Zungen 16, insbesondere Federzungen so abgesperrt, daß die Beschlagteile 13 hieraus nicht unbeabsichtigt entweichen können.

Ein Vergleich der Fig. 1 und 3 einerseits sowie der Fig. 2 und 4 andererseits macht deutlich, daß die Transport- und/oder Lagerverpackung 1 (Fig. 1 und 3) im wesentlichen eine winkelförmige Querschnittskontur begrenzt, während die Transport- und/oder Lagerverpackung 11 (Fig. 2 und 4) eine im wesentlichen flach-rechteckige Querschnittskontur bestimmt.

In Fig. 5 der Zeichnung ist in einer den Fig. 3 und 4 entsprechenden Querschnittsdarstellung zu sehen, wie zwei jeweils mit einer Vielzahl von Beschlagteilen 3 gefüllte Transport- und/oder Lagerverpackungen 1 sowie eine jeweils mit einer Vielzahl von Beschlagteilen 13 befüllte Transport- und/oder Lagerverpackung 11 einer (nicht gezeigten) Beschlagteil-Montagemaschine jeweils unmittelbar als Wechselmagazine zugeordnet werden können, um dort die geordnete bzw. ausgerichtete Einzelentnahme der betreffenden Beschlagteile 3 und 13 mit Hilfe der Manipulator-Aggregate zu ermöglichen.

Vom Beschlaghersteller werden die Beschläge 3 bzw. 13,z.B. automatisch und ordnungsgemäß, in die Transport- und/oder Lagerverpackungen 1 bzw. 11 eingebracht, so daß jeweils stangenförmige Packeinheiten entstehen, die sich in gestapelter Anordnung transportieren und/oder lagern lassen, wie das aus den Fig. 6 und 7 der Zeichnung deutlich hervorgeht.

Eine stabile und raumsparende Stapelung der mit den winkelförmigen Transport- und/oder Lagerverpackungen 1 gebildeten Packeinheiten ist in der aus Fig. 6 ersichtlichen Art und Weise möglich. Hingegen lassen sich die mit Hilfe der Transport- und/oder Lagerverpackungen 11 gebildeten Packeinheiten besonders günstig in der aus Fig. 7 ersichtlichen Art und Weise stapeln.

Zum Zwecke der Stapelsicherung sind die Transport- und/oder Lagerverpackungen 1 nach den Fig. 1, 3 und 6 jeweils mit einer längsverlaufenden Gummileiste 17 ausgestattet.

Der Stapelsicherung für die mit der Transport- und/oder Lagerverpackung 11 gebildeten Packeinheiten dienen hingegen jeweils Längsstege 18, mit welchen sich bei der Stapelung die Randstege 14e in wechselseitigen Formschlußeingriff bringen lassen.

Nach dem Aufstecken der Transport- und/oder Lagerverpackungen 1 und 11 als Wechselmagazine auf die zugeordneten Haltevorrichtungen an der Beschlagteil-Montagemaschine lassen sich die Federzungen 6 bzw. 16 am betreffenden Ende der Packeinheit selbstverständlich so beeinflussen, daß sie den Stapelschacht 2 bzw. 12 zumindest immer dann zwangsweise freigeben, wenn aus diesem, beispielsweise mittels des Manipulator-Aggregates ein einzelnes Beschlagteil 3 bzw. 13 entnommen werden muß.

Während die vorstehend anhand der Zeichnungen erläuterten Transport- und/oder Lagerverpackungen 1 und 11 als ständig wiederverwendbare Wechselmagazine benutzt werden können, die der Fenster- und Türenhersteller nach Entleerung zur Wiederbefüllung an den Beschlaghersteller zurücksendet, besteht natürlich auch die Möglichkeit, als Tansport- und/oder Lagerverpackungen 1 und 11 Schichtkörperprofile, beispielsweise aus Hartpappe oder auch Blech, zu benutzen, die nur Einweg-Wechselmagazine bilden, also vom Beschlaghersteller gefüllt sowie dann vom Fenster- und Türenhersteller entleert und entsorgt bzw. vernichtet werden können.

Wesentlich ist jedoch, daß jede Transport- und/oder Lagerverpackung 1 bzw. 11 zugleich auch ein Wechselmagazin ist, das den Fenster- und Türenhersteller bzw. die Bedienungsperson der Beschlagteil-Montagemaschine von der ordnungsgemäßen Einsortierung der Beschlagteile in maschineneigene Zuführschächte entlastet.

In Fig. 5 der Zeichnung ist schließlich noch dargestellt, in welche Position der mit den Beschlagteilen 3 und 13 auszustattende Fenster- bzw. Türrahmen auf der Beschlagteil-Montagemaschine relativ zu den als Wechselmagazine dienenden Transport- und/oder Lagerverpackungen 1 und 11 jeweils gebracht werden muß, um die ordnungsgemäße Positionierung und Befestigung dieser Beschlagteile 3 und 13 an der Rahmenstirnfläche zu ermöglichen.

Die obere Rahmenposition nach Fig. 5 wird dabei für Rechtsanschlag der Beschlagteile 3 und 13 eingestellt, während die untere Rahmenposition für Linksanschlag dieser Beschlagteile 3 und 13 einzustellen ist.

## Patentansprüche

1. Stangenmagazin für maschinell an Fenster- und Türrahmen od. dgl., insbesondere am Blend- bzw. Stockrahmen, zu montierende Beschlagteile (3 bzw. 13) vornehmlich für auf die Rahmenstirnfläche aufsetzbare Ecklager, Scherenlager, Drehlager und Mitteldrehlager, welches Halterungen und Führungen (4a bis 4d bzw. 14a bis 14d) zur hinter- und/oder übereinander ausgerichteten Aufnahme einer Vielzahl von jeweils übereinstimmenden Beschlagteilen (3 bzw. 13) aufweist,
gekennzeichnet
durch die gleichzeitige Verwendung sowohl als Transport- und/oder Lagerverpackung (1 bzw. 11) als auch als Wechselmagazin auf einer Beschlagteil-Montagemaschine.

2. Stangenmagazin nach Anspruch 1,
dadurch gekennzeichnet,
daß es von mindestens einem Strangpreß- bzw. Extrusionsprofil aus Metall oder Kunststoff gebildet ist.

3. Stangenmagazin nach Anspruch 1,
dadurch gekennzeichnet,
daß es aus einem Schichtkörperprofil, beispielsweise aus Hartpappe oder auch Blech, gebildet ist.

4. Stangenmagazin nach einem der Ansprüche 1 bis 3,
dadurch gekennzeichnet,
daß der Beschlagteil-Stapelschacht (2 bzw. 12) ein dem Längsschnitt-Profil der Beschlagteile (3 bzw. 13) angepaßtes Querschnittsprofil aufweist.

5. Stangenmagazin nach einem der Ansprüche 1 bis 4,
dadurch gekennzeichnet,
daß die Enden des Beschlagteil-Stapelschachtes (2 bzw. 12) der Transport- und/ oder Lagerverpackung (1 bzw. 11) zumindest bereichsweise durch eine bewegliche Zunge, vorzugsweise eine Federzunge (6 bzw. 16) , absperrbar sind.

6. Stangenmagazin nach einem der Ansprüche 1 bis 5,
dadurch gekennzeichnet,
daß es mit den in seinem Stapelschacht (2 bzw. 12) befindlichen Beschlagteilen (3 bzw. 13) eine quer zu ihrer Längsrichtung stapelfähige Packeinheit bildet (Fig. 6 bzw. Fig. 7).

## Claims

1. A bar-like carrier for components (3, 13) to be mounted on window and door frames or the like, more particularly on the fixed frames of doors and windows, preferably for corner bearings, scissors bearings, pivot bearings and centre-pivot bearings adapted to be placed on the frame end face, the carrier having retaining means and guides (4a - 4d and 14a - 14d respectively) for the reception consecutively and/or one above another of a number of like components (3, 13 respectively)
characterised
by the simultaneous use of the bar-like carriers as a transport and/or storage pack (1, 11 respectively) and as change carrier on a component assembly machine.

2. A carrier according to claim 1,
characterised in that
it consists of at least one extruded metal or plastics section.

3. A carrier according to claim 1,
characterised in that
it consists of a laminated section, for example, of millboard or sheet metal.

4. A carrier according to any of claims 1 to 3,
characterised in that
the component stack gallery (2, 12 respectively) has a cross-sectional shape adapted to the longitudinal sectional shape of the components (3, 13 respectively).

5. A carrier according to any of claims 1 to 4,
characterised in that
the ends of the component stack gallery (2, 12 respectively) of the transport and/or storage pack (1, 11 respectively) are closable at least in zones by a moving tongue, preferably a spring tongue (6, 16 respectively).

6. A carrier according to any of claims 1 to 5,
characterised in that
it forms with the components (3, 13 respectively) in its stack gallery (2, 12 respectively) a pack unit stackable transversely of their length (Fig. 6 and Fig. 7 respectively).

## Revendications

1. Un chargeur à barres pour des pièces de ferrure (3 ou 13) qui sont destinées à être montées sur des encadrements de fenêtres, portes ou autres objets de ce genre et consistent de préférence en supports d'angle ou pour mouvement en ciseaux, battant ou pivotant par le centre à fixer sur la face de l'encadrement orientée vers l'intérieur du local, ce chargeur à barres présentant des arrêts-guides (4a à 4d et 14a à 14d) conçus pour accueillir en superposition ou en alignement plusieurs pièces de ferrure (3 ou 13) correspondantes et étant
caractérisé
par son utilisation indifférenciée comme emballage de transport et/ou de stockage (1 ou 11) et comme chargeur de rechange sur une machine de montage de pièces de ferrures.

2. Un chargeur à barres conforme à la revendication 1,
caractérisé
par le fait d'être constitué d'au moins un profilé de métal ou de plastique, filé à chaud ou extrudé.

3. Un chargeur à barres conforme à la revendication 1,
caractérisé
par le fait d'être constitué par un profilé stratifié, par exemple en carton bakélisé ou en tôle.

4. Un chargeur à barres conforme à une des revendications 1 à 3,
caractérisé
par le fait que le rail de groupement de pièces de ferrure (2 ou 12) présente un profil transversal adapté au profil longitudinal de ces pièces de ferrure (3 ou 13).

5. Un chargeur à barres conforme à une des revendications 1 à 4,
caractérisé
par le fait que les extrémités du rail de groupement de pièces de ferrure (2 ou 12) de l'emballage de transport et/ou de stockage (1 ou 11) peuvent être barrées, au moins localement, par une languette mobile, qui est de préférence une languette à ressort (6 ou 16).

6. Un chargeur à barres conforme à une des revendications 1 à 5,
caractérisé
par le fait de constituer avec les pièces de ferrure (3 ou 13) contenues dans son rail de groupement de pièces de ferrure (2 ou 12) une unité de conditionnement pouvant être empilée transversalement par rapport à son sens longitudinal (fig. 6 ou 7).
